# EUROPÄISCHE PATENTSCHRIFT

(11) **EP 4 059 080 B1**
(45) Veröffentlichungstag und Bekanntmachung des Hinweises auf die Patenterteilung: **13.12.2023**
(21) Anmeldenummer: 20800649.4
(22) Anmeldetag: 04.11.2020
(51) Int. Cl.: H01M 10/42

(54) **ELEKTRISCHE MESSANORDNUNG FÜR SEKUNDÄRE ALKALI-FESTELEKTROLYT-BATTERIEN**
ELECTRICAL MEASURING ASSEMBLY FOR SECONDARY ALKALI SOLID-ELECTROLYTE BATTERIES
ENSEMBLE DE MESURE ÉLECTRIQUE POUR BATTERIES SECONDAIRES À ÉLECTROLYTE SOLIDE ALCALIN

(30) Priorität: 12.11.2019 DE 102019130507
(43) Veröffentlichungstag der Anmeldung: 21.09.2022
(73) Patentinhaber: Forschungszentrum Jülich GmbH, 52428 Jülich (DE)
(72) Erfinder: HOMANN, Gerrit, 48149 Münster (DE); KASNATSCHEEW, Johannes, 48249 Dülmen (DE); RAVI NAIR, Jijeesh, 48153 Münster (DE); GRÜNEBAUM, Mariano, 59394 Nordkirchen (DE); WINTER, Martin, 48149 Münster (DE)
(74) Vertreter: Michalski Hüttermann & Partner Patentanwälte mbB
(86) Internationale Anmeldenummer: PCT/EP2020/080977
(87) Internationale Veröffentlichungsnummer: WO 2021/094167

(56) Entgegenhaltungen:
- WO-A1-2017/211379
- CN-A- 110 320 476
- DE-A1-102019 101 772

## Beschreibung

Die vorliegende Erfindung betrifft eine Messanordnung für sekundäre Alkali-Festelektrolyt-Batterien umfassend zwei elektrisch nicht-leitende Zellkörperhälften, wobei beide Zellkörperhälften mindestens eine und eine Zellkörperhälfte mindestens drei Durchführungen aufweist, wobei beide Zellkörperhälften einen Aufnahmeraum zur Aufnahme einer Festelektrolyt-Batteriezelle aus mindestens einer Anode, einer Kathode und einem Festelektrolyt ausbilden; ein elektrisch leitendes Halteelement für jede Durchführung; ein elektrisches Kontaktelement für jedes Halteelement, wobei das elektrische Kontaktelement dazu eingerichtet ist, seine Länge in Abhängigkeit der auf das Element wirkenden Kraft zu ändern; und zwei flächige Stromableiter aufweisend elektrisch leitende und elektrisch nicht-leitende Bereiche, wobei mindestens einer der Stromableiter dazu eingerichtet ist, mindestens drei separate, elektrisch leitende Verbindungen zwischen den Kontaktelementen und einer Elektrode der Festelektrolyt-Batteriezelle auszubilden. Des Weiteren betrifft die vorliegende Erfindung die Verwendung der Messanordnung zur Bestimmung der elektrischen Eigenschaften sekundärer Alkali-Festelektrolyt-Batteriezellen.

Die gestiegenen Anforderungen der Nutzer an Nachhaltigkeit und Mobilität haben in den letzten Jahrzehnten die Landschaft der dezentralen Energiespeicher deutlich verändert. Waren in der Vergangenheit die Möglichkeiten der technischen Nutzung von Batterien aufgrund der Größe, des Gewichts und der nur sehr begrenzten elektrischen Kapazität deutlich eingeschränkt, so haben seit dem Einsatz von Alkalimetall basierten Energiespeichern, beispielsweise in Form wiederaufladbarer Lithiumbatterien, die Einsatzmöglichkeiten deutlich zugenommen. Seit Beginn ihrer Markteinführung Anfang der 90er Jahre haben Lithium-Ionen-Batterien die Massentauglichkeit mobiler Anwendungen wie Smartphones und Laptops erst ermöglicht. Kontinuierliche Weiterentwicklungen haben zudem zu einer Steigerung der Energiedichten und der Anwendungssicherheit geführt. Gerade diese Optimierungsschritte haben dazu beigetragen, dass beispielsweise Lithium-Ionen-Batterien heutzutage als stationäre Energiespeicher für dezentral erzeugte Elektrizität im Privat- und Industriebereich in Frage kommen. Des Weiteren bilden diese innovativen elektrischen Speicher die Grundlage neuer, klimafreundlicher Verkehrskonzepte im Bereich der Elektromobilität.

Eine der wichtigsten Grundlagen zur zielgerichteten Optimierung von Batterien bildet die Möglichkeit zur schnellen und reproduzierbaren Bestimmung elektrischer Zelleigenschaften. Im Bereich der Flüssigelektrolytforschung werden dabei klassischerweise 2-ElektrodenAufbauten in Form von Pouchbags oder Knopfzellen genutzt. Diese haben den entscheidenden Nachteil, dass eine dritte Elektrode, die Referenzelektrode, welche für die Grundlagenforschung notwendig aber nicht anbringbar ist, fehlt, um verschiedene Degradationsprozesse innerhalb einer Zelle identifizieren zu können. Für elektrochemische Analysen unter Einsatz einer Referenzelektrode, z.B. in Form von Lithiummetall, werden häufig T-Zellen (beispielsweise von Swagelok) mit entsprechenden Einsätzen genutzt. Diese sind jedoch auf Grund der Geometrie nur für Zellen mit Flüssigelektrolyt sinnvoll nutzbar. Die Zellaufbauten mit Referenzelektrode bestehen aus vielen Einzelteilen, welche einzeln gereinigt und entsprechend mehrschrittig assembliert werden müssen. Dies ist beispielsweise in einer Glovebox mit einem größeren Zeitaufwand und erhöhtem Schwierigkeitsgrad verbunden. Die Druckverteilung innerhalb der Zellen erfolgt üblicherweise über einzelne Druckfedern, welche den Druck an einen Pressstempel weitergeben. Swagelok T-Zellen weisen eine Referenz im rechten Winkel zur Elektrolytschicht auf, welches zu einem größeren Weg zwischen Referenz- und der Arbeits-/Gegenelektrode führt. Dies ist für Flüssigelektrolyt-basierte Zellen hinnehmbar, da der absolute Widerstand des Flüssigelektrolyten gering ist. Bei Festelektrolyten ergibt sich jedoch ein erhöhter Widerstand durch den längeren Weg, welches zu messbaren Spannungsunterschieden führt. Weiterhin kann durch thermische Verformung der Proben, z.B. zerfließen der Polymer-Festelektrolyten, ein Kontaktverlust der Elektroden und damit einhergehenden ein Zelltestabbruch erfolgen. In Summe sind diese Nachteile ausschlaggebend dafür, dass mit diesen Aufbauten einfache, verlässliche und reproduzierbare Messungen mit einer Referenzelektrode an Festelektrolyt-Batterien nur schwer durchführbar sind.

Auch in der Patentliteratur finden sich die verschiedensten Vorschläge zum Aufbau von Messanordnungen mit Referenzelektroden.

So offenbart beispielsweise die EP 1 924 849 B1 ein Messsystem zur thermodynamischen Auswertung einer elektrochemischen Zelle, die Elektroden aufweist; wobei besagtes System Folgendes umfasst: ein Mittel zur Messung von Leerlaufspannungen besagter elektrochemischer Zelle als Funktion der Zeit; eine Zusammensetzungssteuerung, die elektrisch mit besagter elektrochemischer Zelle zur Ermittlung ausgewählter elektrochemischer Zellzusammensetzungen verbunden ist, wobei besagte Zusammensetzungssteuerung zur Ermittlung einer Mehrzahl von besagten ausgewählten Zusammensetzungen fähig ist; eine Temperatursteuerung in thermischem Kontakt mit besagter elektrochemischer Zelle zur Ermittlung einer Mehrzahl von ausgewählten elektrochemischen Zelltemperaturen bei jeder von besagten ausgewählten Zusammensetzungen, wodurch eine Mehrzahl von ausgewählten elektrochemischen Zelltemperatur- und -zusammensetzungskombinationen ermittelt wird; und einen Leerlaufspannungsanalysator zum Empfang von Leerlaufspannungsmessungen als Funktion der Zeit aus besagtem Mittel zur Messung von Leerlaufspannungen und zur Identifizierung von Leerlaufspannungen bei thermochemisch stabilisierten Bedingungen besagter elektrochemischer Zelle bei besagten elektrochemischen Zelltemperatur- und -zusammensetzungskombinationen, dadurch gekennzeichnet, dass besagter Leerlaufspannungsanalysator ein Prozessor ist, der zur Ausführung eines Algorithmus fähig ist, der beobachtete Änderungsraten der Leerlaufspannung pro Zeiteinheit bei einer ausgewählten elektrochemischen Zelltemperatur- und -zusammensetzungskombination mithilfe besagter Leerlaufspannungsmessungen als Funktion der Zeit, die aus besagtem Mittel zur Leerlaufspannungsmessung entgegengenommen werden, berechnet, worin besagter Algorithmus absolute Werte besagter beobachteter Änderungsraten der Leerlaufspannung pro Zeiteinheit bei besagter ausgewählter elektrochemischer Zelltemperatur- und -zusammensetzungskombination mit einer Schwellenänderungsrate der Leerlaufspannung pro Zeiteinheit vergleicht, und worin besagter Algorithmus eine Leerlaufspannung gleich besagter Leerlaufspannung besagter elektrochemischer Zelle bei thermochemisch stabilisierten Bedingungen bei besagter ausgewählter elektrochemischer Zelltemperatur- und -zusammensetzungskombination identifiziert, wenn der absolute Wert der beobachteten Änderungsrate der Leerlaufspannung pro Zeiteinheit gleich oder weniger als besagte Schwellenänderungsrate der Leerlaufspannung pro Zeiteinheit ist; worin besagte Schwellenänderungsrate der Leerlaufspannung als Funktion der Zeit gleich oder weniger als 1 mV h⁻¹ ist.

Des Weiteren offenbart die EP 3 108 224 B1 einen Referenzelektrodeneinsatz für eine elektrochemische Testzelle, insbesondere zum Testen von Lithium-Ionen-Zellen, umfassend eine Referenzelektrode und eine Hülse zur Halterung der Referenzelektrode, dadurch gekennzeichnet, dass die Hülse und die ringförmige Referenzelektrode eine bauliche Einheit bilden, wobei die Referenzelektrode fest und unverlierbar in der Hülse eingekapselt gehalten ist.

In einem weiteren Patentdokument, der DE 10 2019 101 772 A1, wird eine Vorrichtung zur Durchführung der elektrochemischen Analyse von elektrochemischen Zellen beschrieben. Die Vorrichtung beinhaltet ein Gehäuse, obere und untere Stapelhalterungen sowie erste, zweite und dritte Stromabnehmer. Das Gehäuse beinhaltet eine hermetisch abdichtbare innere Kammer und eine sich durch die innere Kammer erstreckende Mittelachse. Die oberen und unteren Stapelhalter sind innerhalb der inneren Kammer angeordnet und bilden zusammen eine Elektrodenstapelkammer zum Aufnehmen einer negativen Elektrode, einer positiven Elektrode und einer mittig montierten Referenzelektrode. Die ersten, zweiten und dritten Stromabnehmer sind zumindest teilweise in der inneren Kammer angeordnet. Der erste Stromabnehmer kann elektrisch mit einer ersten Seite der negativen Elektrode und einer externen Schaltung verbunden werden. Der zweite Stromabnehmer kann mit der zweiten positiven Elektrode und der externen Schaltung elektrisch verbunden sein. Der dritte zylindrische Körper kann mit der mittig angeordneten Referenzelektrode und der externen Schaltung elektrisch verbunden sein. Des Weiteren beschäftigen sich die WO 2017/211379 A1 und die CN 110 320 476 A mit dem Aufbau von Vorrichtungen zur elektrochemischen Analyse.

Derartige aus dem Stand der Technik bekannte Lösungen können noch weiteres Verbesserungspotential bieten, insbesondere hinsichtlich der Flexibilität und der Einfachheit des Messaufbaus sowie in der Reproduzierbarkeit der erhebbaren Parameter.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung eine Lösung bereitzustellen, welche innerhalb kurzer Rüstzeiten unter reproduzierbaren Probenbedingungen eine Vielzahl an reproduzierbaren Messungen ermöglicht.

Die Lösung der Aufgabe erfolgt durch die Merkmale der jeweiligen unabhängigen Ansprüche, gerichtet auf den erfindungsgemäßen Messaufbau sowie die erfindungsgemäße Verwendung. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Die Lösung der Aufgabe erfolgt erfindungsgemäß durch eine elektrische Messanordnung für sekundäre Alkali-Festelektrolyt-Batterien, wobei die Messanordnung mindestens umfasst:
zwei elektrisch nicht-leitende Zellkörperhälften, wobei beide Zellkörperhälften mindestens eine und eine Zellkörperhälfte mindestens drei Durchführungen aufweist, wobei beide Zellkörperhälften an der Innenseite jeweils eine Aussparung aufweisen, wobei die Aussparungen zusammen genommen einen Aufnahmeraum zur Aufnahme einer Festelektrolyt-Batteriezelle aus mindestens einer Anode, einer Kathode und einem Festelektrolyt ausbilden, und die Durchführungen sich jeweils von einer Außenseite der Zellkörperhälfte zum Aufnahmeraum hin erstrecken;
ein elektrisch leitendes Halteelement für jede Durchführung, wobei das Halteelement dazu ausgerüstet ist mit der jeweiligen Zellkörperhälfte mechanisch verbindbar zu sein;
ein elektrisches Kontaktelement für jedes Halteelement, wobei das elektrische Kontaktelement zum Aufnahmeraum hin an dem Halteelement anbringbar und dazu eingerichtet ist, seine Länge in Abhängigkeit der auf das Element wirkenden Kraft zu ändern; und
zwei flächige Stromableiter aufweisend elektrisch leitende und elektrisch nicht-leitende Bereiche, wobei mindestens einer der Stromableiter dazu eingerichtet ist, mindestens drei separate, elektrisch leitende Verbindungen zwischen den Kontaktelementen und einer Elektrode der Festelektrolyt-Batteriezelle auszubilden, wobei die mechanische Kraft der Kontaktelemente über die Stromableiter auf die Festelektrolyt-Batterie ausgeübt wird.

Überraschend hat sich gezeigt, dass oben beschriebener Multielektroden-Messaufbau in der Lage ist, sehr reproduzierbar die elektrischen Eigenschaften von Festelektrolyt-Batteriezellen zu bestimmen. Der Aufbau ist einfach in dem Sinne, dass er nur aus wenigen Teilen besteht und kann demzufolge auch unter "ungünstigen" Glovebox-Bedingungen schnell auseinander- und zusammengebaut werden. Zudem ist der Aufbau auch einfach zu reinigen. Durch die Möglichkeit des Einsatzes großflächiger Metall-Stromableiter in Form der Halteelemente ist gleichzeitig auch eine schnelle und gleichmäßige Temperierung des Zellinneren möglich. Durch den Aufbau wird generell eine sehr gleichmäßige und kontrollierbare Kraft auf die zu vermessenden Festelektrolyt-Batteriezellen ausgeübt. Es besteht also nur eine geringe Gefahr der mechanischen Schädigung der Zellen, welches dann unweigerlich zu fehlerhaften Messungen oder Messabbrüchen führt. Des Weiteren können durch den gewählten Aufbau die üblicherweise unebenen Probenflächen von Festelektrolyt-Batteriezellen verlässlich eingeebnet und somit verlässlich kontaktiert werden. Durch die geringe Anzahl an beweglichen Teilen lässt sich der Aufbau zudem auch mit einer nur geringen Anzahl an Dichtungen verlässlich abdichten. Insbesondere durch die Halteelemente und deren Materialauswahl lässt sich zudem die Aufheizperiode des gesamten Zellaufbaus steuern, sodass schnelle Temperaturprofile mit dem Messaufbau gefahren werden können.

Die erfindungsgemäße Messanordnung ist eine elektrische Messanordnung für sekundäre Alkali-Festelektrolyt-Batterien. Ein Festelektrolyt wird auch Festkörperelektrolyt, Feststoffelektrolyt oder fester Ionenleiter genannt. Der Festelektrolyt weist eine zusammenhängende polymere Trägerstruktur und darin eingebettete Alkalimetall-Ionen auf, welche innerhalb der polymeren Matrix des Festelektrolyten beweglich sind. Über die Beweglichkeit der Ionen im Festelektrolyt kann ein elektrischer Strom fließen. Festelektrolyte sind elektrisch leitend, zeigen aber verglichen mit Metallen eine eher geringe elektronische Leitfähigkeit. Eine Alkalimetall-Feststoffbatterie weist mindestens zwei Elektroden und einen zwischen den Elektroden angeordneten festen, insbesondere nicht fließfähigen Elektrolyten auf. Neben diesen Bestandteilen kann eine Feststoffbatterie noch weitere Schichten oder Lagen aufweisen. Beispielsweise kann eine Feststoffbatterie noch weitere Lagen zwischen dem Festelektrolyt und den Elektroden aufweisen. Die elektrischen Eigenschaften von Alkalimetall-Feststoffbatterien basieren auf der Redoxreaktion von Alkalimetallen, also den Metallen aus der 1. Hauptgruppe des Periodensystems. Insbesondere als Alkalimetalle lassen sich Lithium, Natrium und Kalium einsetzten.

Der erfindungsgemäße Aufbau weist zwei elektrisch nicht-leitende Zellkörperhälften auf, wobei beide Zellkörperhälften mindestens eine und eine Zellkörperhälfte mindestens drei Durchführungen aufweist, wobei die Durchführungen sich jeweils von einer Außenseite der Zellkörperhälfte zum Aufnahmeraum hin erstrecken. Die elektrisch nicht-leitenden Zellkörperhälften können aus PP, PE, PTFE, PEEK oder POM oder anderen, nicht-leitenden Kunststoffen gefertigt sein. PEEK kann sich in Kombination mit elektrisch leitenden Teilen aus Edelstahl anbieten, da der thermische Ausdehnungskoeffizient beider Materialien im hier relevanten Temperaturbereich annähernd gleich ist. Die Zellkörperhälften können einen symmetrischen Aufbau aufweisen in dem Sinne, dass diese gleich aufgebaut sind. Die Durchführungen erstrecken sich dabei für jede Hälfte von der oberen zu der unteren Seite, wobei die Durchführungen jeweils die gesamte Zellkörperhälfte durchringt. Die Durchführung ermöglicht für jede Zellhälfte eine Kontaktierung des Aufnahmeraumes der zu vermessenden Batteriezelle, beispielsweise in Form einer oder mehrerer konzentrischer Bohrungen. Die Anzahl der möglichen Durchführungen ist prinzipiell nur durch die Fläche der Durchführungen und die Fläche der Zellkörper begrenzt. Zweckmäßigerweise kann jede Zellkörperhälfte 1, 2, 3, 4, 5 oder 6 Durchführungen aufweisen, wobei mindestens eine Zellkörperhälfte mindestens drei Bohrungen aufweist. Die beiden Zellkörperhälften können über weitere Mittel verfügen, welche die beiden Zellkörperhälften mechanisch zusammenhalten. Letzteres beispielsweise in Form von Klammern oder Handschrauben. Es ist aber auch möglich, dass die beiden Zellteile über eine nicht zum eigentlichen Messaufbau gehörende, mechanische Presse zusammengehalten werden. In der weiteren Beschreibung wird auf eine "obere" und "untere" Zellhälfte Bezug genommen. Diese Bezeichnungen sind willkürlich gewählt und können auch durch "rechts" und "links" ersetzt werden.

Beide Zellkörperhälften weisen an der Innenseite jeweils eine Aussparung auf, wobei die Aussparungen zusammen genommen einen Aufnahmeraum zur Aufnahme einer Festelektrolyt-Batteriezelle aus mindestens einer Anode, einer Kathode und einem Festelektrolyt ausbilden. Beide Zellkörperhälften weisen also einen "oberen" und einen "unteren" Teil auf, wobei beim Zusammenfügen der Zellkörperhälften die unteren Teile in Kontakt zueinanderstehen. Diese unteren Teile der Zellkörperhälften weisen demzufolge auch dann jeweils die Aussparung auf, welche dann in Summe den Aufnahmeraum für die Batteriezelle bildet. Neben der Batteriezelle als solche, kann der Aufnahmeraum auch noch weitere Bestandteile des Zellaufbaus, wie beispielsweise die Stromableiter oder aber auch die Kontaktelemente zumindest partiell aufnehmen. Die Aussparungen für den Aufnahmeraum auf den beiden Zellkörperhälften können gleich, annähernd gleich groß oder in der Größe unterschiedlich sein. Bevorzugt ist, dass beide Zellkörperhälften annähernd gleich große Aussparungen aufweisen und sich insofern ein symmetrischer Aufnahmeraum für die Batteriezelle ergibt. Eine oder beide Zellkörperhälften können des Weiteren Vorrichtungen zum Temperieren der Zelle oder weitere Sensoren, wie beispielsweise Temperaturfühler, aufweisen.

In jede Durchführung ist ein elektrisch leitendes Halteelement einführbar, wobei das Halteelement dazu ausgerüstet ist mit der jeweiligen Zellkörperhälfte mechanisch verbindbar zu sein. Zur Kontaktierung der Batteriezellen im Aufnahmeraum kann in jede Durchführung ein leitendes Halteelement eingebracht werden oder eingebracht sein. Das Halteelement kann beispielsweise als Metallstift oder als Metallschraube ausgestaltet sein, welche in die Zellkörperhälften eingeschlagen oder eingeschraubt wird. Durch das Einschlagen oder Einschrauben wird eine mechanische Verbindung zwischen Halteelement und Zellkörperhälfte hergestellt. Das Halteelement kann beispielsweise aus Edelstahl, Stahl, Kupfer, Platin oder sonstigen leitenden Metallen ausgestaltet sein. Bevorzugt handelt es sich um Edelstahlschrauben. Der Abstand eines Halteelementes zum Anfang des Aufnahmeraums kann im Bereich zwischen 0,1 - 35 mm, bevorzugt zwischen 0,25 - 5 mm liegen. Dies kann zu einer schnelleren thermischen Response der Batteriezelle führen.

Jedes Halteelement lässt sich mit einem elektrisches Kontaktelement verbinden, wobei das elektrische Kontaktelement zum Aufnahmeraum hin an dem Halteelement anbringbar und dazu eingerichtet ist, seine Länge in Abhängigkeit der auf das Element wirkenden Kraft zu ändern. Zur elektrischen Kontaktierung einer Batterie im Aufnahmeraum werden elektrische Kontaktelemente verwendet, welche an den Haltelementen angebracht sind oder angebracht werden können. Dies kann beispielsweise dadurch erfolgen, indem die Kontaktelemente beispielsweise durch hohle Halteelemente geführt werden und an der Spitze der Halteelemente austreten. Es ist aber auch möglich, dass die Kontaktelemente an der Spitze der Halteelemente auf diese aufgesetzt werden. Die Kontaktelemente können dabei aus unterschiedlichen Metallen oder Metalllegierungen bestehen. Die Kontaktelemente sind dazu eingerichtet, ihre Länge in Abhängigkeit der auf das Element wirkenden Kraft zu ändern. Die Kontaktelemente weisen als keine starren mechanischen Strukturen auf, sondern sind in der Lage, sich auf die mechanisch wirkenden Kräfte anzupassen. Beispielsweise können Federelemente in den Kontakten dafür sorgen, dass die Länge des Elementes nicht starr, sondern eine Funktion der aktuell vorliegenden mechanischen Belastung ist. Es können beispielsweise aber auch Gasdruckfedern oder Kontakte mit Gasdruckfederelementen eingesetzt werden.

Der Aufbau weist zudem zwei flächige Stromableiter mit elektrisch leitenden und elektrisch nicht-leitenden Bereichen auf, wobei mindestens einer der Stromableiter dazu eingerichtet ist mindestens drei separate, elektrisch leitende Verbindungen zwischen den Kontaktelementen und einer Elektrode der Festelektrolyt-Batteriezelle auszubilden. Flächige Stromableiter können beispielsweise in Form von mehr oder minder dünnen Scheiben oder Zylindern vorliegen und überdecken in ihrer Fläche bevorzugter Weise mindestens die Elektrodenflächen der zu vermessenden Batterien. Bevorzugt kann die Fläche der Stromableiter etwas kleiner (z.B. 0,1 mm) als die Fläche der Aussparung in den Zellkörperhälften sein, um ein einfaches Gleiten der Stromableiter innerhalb der zusammengesetzten Zellhälften zu ermöglichen. Die Stromableiter bestehen dabei bei Aufbauten aus mindestens zwei Elektroden aus mindestens zwei unterschiedlichen, leitenden und nicht-leitenden Materialien. Durch die unterschiedlichen Materialen können Stromableitpfade durch den Stromableiter bereitgestellt werden, sodass unterschiedlich leitende Verbindungen zu unterschiedlichen Kontaktelementen hergestellt werden können. Zudem können unterschiedliche Stellen an der Batterieelektrode kontaktiert werden. Die Stromableiter können zudem auch Teile der Batteriezelle aufnehmen, sodass beispielsweise eine Elektrode der Messanordnung in den Stromableiter eingebettet vorliegen kann. Dies kann zu einer homogeneren Druckverteilung und verringerter Kurzschlussgefahr durch Penetration weicherer Polymermembranen beitragen. Die Stromableiter können beispielsweise als Ringelektroden vorliegen. In diesem Fall kann der Abstand zwischen der einer inneren und äußeren Stromableiterfläche im Bereich zwischen 0,1 - 5 mm liegen, bevorzugt kann der Abstand im Bereich von 0,5 - 2mm, weiter bevorzugt im Bereich von 1 - 1,5mm liegen.

Im erfindungsgemäßen Aufbau wird die mechanische Kraft der Kontaktelemente über die Stromableiter auf die Festelektrolyt-Batterie ausgeübt. In Summe ergibt sich also ein Aufbau, in welchen die zu vermessende Batteriezelle in der Mitte des Aufnahmeraumes gebildet durch die Aussparungen der Zellkörperhälften vorliegt, wobei die Batteriezelle durch mindestens die beiden Stromableiter eingefasst wird und über die Stromableiter die Kontaktelemente elektrisch kontaktiert. Die elektrischen Signale können dann über die Halteelemente aus der Messanordnung herausgeführt werden. Die Kontaktelemente sorgen dabei für den elektrischen Kontakt zum Stromableiter und durch die variable Länge der Kontaktelemente kann auch ein Kraftbereich definiert werden, welcher über die Kontaktelemente an die Stromableiter und somit an der Batteriezelle anliegt.

Innerhalb einer bevorzugten Ausführungsform der Messanordnung kann der Aufnahmeraum rotationssymmetrisch ausgebildet sein. Um einen möglichst symmetrischen mechanischen und thermischen Aufbau zu erhalten, hat sich eine rotationssymmetrische Messzelle als besonders geeignet herausgestellt. Die Anzahl an Zellfehlern während der Messungen kann durch diesen Aufbau reduziert werden. Zudem sind die erhältlichen Messwerte besonders aussagekräftig, da Unterschiede durch unterschiedliche Temperaturgradienten oder eine unterschiedliche mechanische Belastung der Zelle weitgehend ausgeschlossen werden können. Dies ist ein besonderer Vorteil gegenüber den Aufbauten aus dem Stand der Technik, welche häufig auf einem asymmetrischen Zellaufbau basieren. So weisen Swagelok-T-Zellen eine Referenz im rechten Winkel zur Elektrolytschicht auf, welches zu einem größeren Weg zwischen Referenz und Arbeits-/Gegenelektrode führt.

Innerhalb eines bevorzugten Aspektes der Messanordnung können die unterschiedlichen Kontaktelemente jeder Zellkörperhälfte unterschiedliche Metalle aufweisen. Die Kontaktelemente einer Zellkörperhälfte können also aus unterschiedlichen Metallen oder Metalllegierungen bestehen. Aufgrund der Tatsache, dass die Kontaktelemente unabhängig voneinander mit den Halteelemente verbunden werden können, kann jedes einzelne Kontaktelement unabhängig von den weiteren Kontaktelementen auf Basis seiner gewünschten elektrischen Eigenschaften ausgewählt werden. Die Metallauswahl für die Kontaktelemente kann zudem auch für beide Zellkörperhälften unterschiedlich gewählt werden. So kann beispielsweise in einem Aufbau mit vier Bohrungen und vier Kontaktelementen ein Kontaktelement jeweils als Kupfer-, Platin-, Nickel- und Eisen-Kontakt ausgeführt werden. Es ergibt sich ein flexibler Aufbau, wobei die konkrete Materialauswahl pro Kontaktpunkt flexibel an die Messaufgabe angepasst werden kann.

Im Rahmen einer bevorzugten Charakteristik der Messanordnung kann das elektrische Kontaktelement ein Federkontakt und die Anordnung der Kontaktelemente zum Aufnahmeraum hin rotationssymmetrisch sein. Eine symmetrische Kontaktierung der Batteriezellen über Federkontakte hat sich als besonders mechanisch reproduzierbar erwiesen. Der Anteil an Fehlmessungen durch ein physikalisches Versagen des Festkörperaufbaus während der Messungen kann dadurch reduziert werden. Zudem lässt sich der Messaufbau über die Eigenschaften der mechanischen Federelemente an viele unterschiedliche Festelektrolyt-Batteriezellen flexibel anpassen. Ein rotationssymmetrischer Aufbau der Kontaktelemente führt zudem dazu, dass die mechanische und thermische Belastung der Batteriezelle möglichst gleichmäßig ist, sodass unterschiedliche Messwerte rein auf die Batterieeigenschaften zurückgeführt werden können. Die Federkontakte können aus Kupfer oder Gold oder vergoldet sein, um einen idealen elektrischen Kontakt zu ermöglichen. Gleichzeitig sind diese Materialien inert gegenüber chemischen Reaktionen mit Testsubstanzen innerhalb der Zelle. Jedoch sind prinzipiell alle elektrisch leitenden Federkontakte möglich. Besonders beim Einsatz mit sulfidischen Elektrolyten und schwefel-basierten Materialien wird Gold präferiert, um eine Abreaktion von gängigen Kupferkontakten zu verhindern. Das Verhältnis von Federkontaktfläche zu Stromableiterfläche kann vorzugsweise zwischen 1:1500 und 1500:1 liegen, idealerweise im Verhältnis zwischen 1:200 und 200:1 und noch präferierter im Bereich zwischen 150:1 und 50:1. Die maximale Auslenkung der Federkontakte im Grundzustand beträgt vorzugsweise mindestens die Tiefe des Aufnahmeraumes. Das Verhältnis der Höhe vom Aufnahmeraum zu der Höhe der Kontaktelemente kann zwischen 100:1 und 1:1, vorzugweise im Verhältnis 1.5:1 betragen.

In einem bevorzugten Aspekt der Messanordnung kann jede Messkörperhälfte vier Durchführungen, vier Halteelemente und vier Kontaktelemente aufweisen, wobei eines der elektrischen Kontaktelemente mittig und die weiteren drei Kontaktelemente auf einer Kreisbahn um das mittige Kontaktelement herum und die drei weiteren Kontaktelemente auf der Kreisbahn um jeweils 120° versetzt angeordnet sind. Diese Anordnung der Kontaktelemente zum Stromableiter kann zu einer besonders gleichmäßigen mechanischen Belastung der Batteriezelle führen. Es ergibt sich ein ebener Aufbau der Batteriezelle mit einem innigen Kontakt vom Festelektrolyten zu den Elektroden. Zudem ergibt sich ein thermischer Aufbau, welcher zu möglichst wenigen Temperaturgradienten in der Batteriezelle führt. Über diese Ausgestaltung der Elektrodeneinsätze können bis zu vier unterschiedliche elektrische Signale einer 4-Elektrodenzelle gemessen werden. Beispielsweise kann Lithiummetall als Gegen- und Referenzelektrode dienen und gleichzeitig kann dabei das Potenzial gegenüber einer frei wählbaren Referenz, wie beispielsweise Gold, gemessen werden.

In einer weiteren, bevorzugten Ausführungsform der Messanordnung können die elektrischen Kontaktelemente der unteren und der oberen Zellkörperhälfte während der Messung um 60° zueinander versetzt angeordnet sein. Im zusammengesetzten Zustand haben sich Zell-Ausgestaltungen bewährt, in denen die elektrischen Kontakte der unteren und der obere Zellkörperhälfte gegeneinander verschoben sind. Dies kann die Anzahl der kontaktierten Flächen für eine Wärmeübertragung vergrößern und zu einer schnelleren Aufwärmung der Probe führen. Zudem kann sich der auf die Probe ausgeübte Druck dadurch besser verteilen.

Innerhalb einer bevorzugten Ausgestaltung der Messanordnung können die Stromableiter Vertiefungen an den Stellen aufweisen, an denen die Stromableiter von den Kontaktelementen elektrisch kontaktiert werden. Die Vertiefungen werden zur Messung hin von den Kontaktelementen aufgefüllt. Durch diese Ausgestaltung ergibt sich eine ebene Ausrichtung des Batteriezellaufbaus mit einer möglichst gleichmäßigen mechanischen Belastung während der Messung. Zudem ermöglicht diese Ausgestaltung eine verbesserte Gasdichtigkeit des Aufbaus, welches zu einer Reduzierung fehlerhafter Messung aufgrund von Leckagen beitragen kann.

Innerhalb eines bevorzugten Aspektes der Messanordnung kann einer der Stromableiter eine zylindrische Geometrie und der andere Stromableiter eine zylindrische Geometrie mit abgerundeten Kanten aufweisen. Bevorzugt kann mindestens einer der Elektrodeneinsätze abgerundete Kanten aufweisen, welche eine flexiblere Kontaktierung der Stromableiter zu der eingesetzten Elektrode ermöglicht. Letzteres kann besonders für Keramikelektroden relevant sein, da die Erzeugung ebener Flächen für diese Elektrodenart technisch herausfordernd ist.

In einer bevorzugten Charakteristik der Messanordnung kann jeder der Stromableiter zur Innenseite des Aufnahmeraumes hin eine Aussparung aufweisen, wobei die Aussparung dazu eingerichtet ist, eine Elektrode der Festelektrolyt-Batterie aufzunehmen. Die Integration einer oder mehrerer Elektroden der Batteriezelle in die Stromableiter kann zu einer besonders ebenen Ausrichtung des Festelektrolyten und zu einer besonders effizienten und gleichmäßigen Kontaktierung des Festelektrolyten durch den Stromableiter führen. Der Aufbau ist mechanisch ausgeglichen und zudem ergibt sich ein symmetrisches Temperaturverhalten. Dieser Aufbau kann die Anzahl an Messabbrüchen durch eine nur ungenügende Kontaktierung des Festelektrolyten oder auftretende Undichtigkeiten der Zelle verringern.

In einer bevorzugten Ausgestaltung der Messanordnung können die Federkontakte eine Federkonstante von größer oder gleich 0,05 N und kleiner oder gleich 50 N aufweisen. Diese Bereiche für die Federkonstante haben sich zur Herstellung einer hinreichend mechanischen Anbindung der Stromableiter an die Kontaktelemente als besonders geeignet erwiesen. Die möglichen Kräfte sind nicht zu hoch, sodass eine Beschädigung der Stromableiter vermieden wird. Die Konstanten sind auch nicht zu niedrig, sodass eine ausreichende mechanische Kontaktierung auch bei einem thermisch bedingten Ausdehnen oder Zusammenziehen der Batteriezelle gewährleistet ist.

Des Weiteren erfindungsgemäß ist die Verwendung einer erfindungsgemäßen Messanordnung zur Bestimmung der elektrischen Eigenschaften sekundärer Alkali-Festelektrolyt-Batteriezellen. Mittels des erfindungsgemäßen Aufbaus können flexibel und sicher die unterschiedlichsten Festelektrolyt-Batteriezellen mit beispielsweise einem drei Elektrodenaufbau vermessen werden. Der Anteil an Messartefakten, bedingt durch eine mechanische Beschädigung der Batteriezelle oder durch einen ungenügenden Kontakt des Festelektrolyten zum Stromableiter, kann durch diesen Aufbau deutlich reduziert werden. Zudem ergeben sich einfach zusammensetzbare Aufbauten ohne zwingende weitere Verschleißteile, wie beispielsweise weitere Polymermembranen. Des Weiteren wird explizit auf die vorstehend genannten Vorteile des erfindungsgemäßen Messaufbaus verwiesen.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in einer Form einzuschränken. Es zeigen die
- Fig. 1: eine schematische Seitenansicht einer erfindungsgemäßen Ausgestaltung einer Zellkörperhälfte (unten);
- Fig. 2: eine schematische Aufsicht einer erfindungsgemäßen Ausgestaltung einer Zellkörperhälfte (unten);
- Fig. 3: eine schematische Unteransicht einer erfindungsgemäßen Ausgestaltung einer Zellkörperhälfte (unten);
- Fig. 4: eine schematische Seitenansicht einer erfindungsgemäßen Ausgestaltung einer Zellkörperhälfte (oben);
- Fig. 5: eine schematische Aufsicht einer erfindungsgemäßen Ausgestaltung einer Zellkörperhälfte (oben);
- Fig. 6: eine schematische Aufsicht einer erfindungsgemäßen Ausgestaltung einer Zellkörperhälfte (oben);
- Fig. 7: einen schematischen Schnitt durch eine erfindungsgemäße Ausgestaltung einer Zellkörperhälfte (unten);
- Fig. 8: einen schematischen Schnitt durch eine erfindungsgemäße Ausgestaltung einer Zellkörperhälfte (oben);
- Fig. 9: eine schematische Aufsicht einer erfindungsgemäßen Ausgestaltung einer Zellkörperhälfte mit 4 unterschiedlichen Kontaktelementen;
- Fig. 10: eine schematische Aufsicht einer erfindungsgemäßen Ausgestaltung eines Stromableiter (unten);
- Fig. 11: eine schematische Aufsicht einer erfindungsgemäßen Ausgestaltung eines Stromableiter mit eingelassener Elektrodenschicht (unten);
- Fig. 12: eine schematische Aufsicht einer erfindungsgemäßen Ausgestaltung eines Stromableiter (oben);
- Fig. 13: ein schematischer Querschnitt eines erfindungsgemäßen Stromableiters (oben);
- Fig. 14: ein schematischer Querschnitt eines erfindungsgemäßen Stromableiters (unten);
- Fig. 15: ein schematischer Querschnitt eines erfindungsgemäßen Stromableiters mit eingelassener Elektrodenschicht (unten);
- Fig. 16: ein schematischer Querschnitt eines erfindungsgemäßen Stromableiters für einen vier Elektrodeneinsatz;
- Fig. 17: eine Messreihe einer NMC622/Li-Halbzelle, aufgetragen ist die Spannung als Funktion der spezifischen Kapazität.

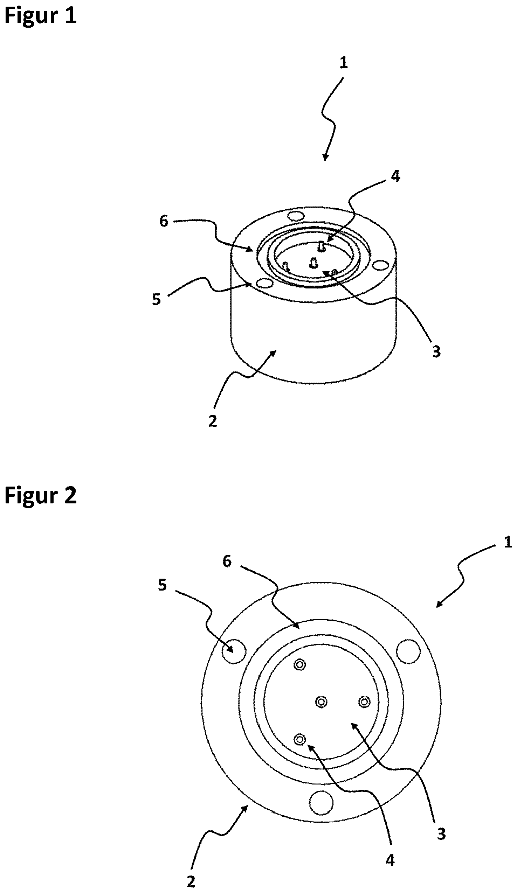

Die Figur 1 zeigt eine schematische Seitenansicht einer Zellkörperhälfte 1. Die dargestellte Zellkörperhälfte 1 kann beispielsweise als eine untere Zellkörperhälfte 1 bezeichnet werden. Der eigentlich Zellkörper 2 kann aus einem Kunststoff wie beispielsweise PEEK bestehen. Die Zellkörperhälfte 1 ist dazu ausgebildet, dass sie mit einer weiteren Zellkörperhälfte 1 kombiniert wird. Die Zellkörperhälfte 1 weist dazu Bohrungen 5 auf, durch welche beide Zellkörperhälften 1 miteinander verbindbar sind. Beispielsweise können durch die Bohrungen 5 Schrauben geführt werden, durch welche beiden Zellkörperhälften 1 miteinander verschraubt werden können. Die dargestellte Zellkörperhälfte 1 weist zudem noch eine optionale Nut 6 auf, welche einen O-Ring aufnehmen kann. Des Weiteren zeigt dieser Ansicht die Kontaktelemente 4 und den Aufnahmeraum 3, in welchen zur eigentlichen Messung die Batteriezelle platziert werden kann.

Die Figur 2 zeigt eine Aufsicht auf eine erfindungsgemäße Zellkörperhälfte 1. Dargestellt ist der eigentliche Zellkörper 2 mit Bohrungen 5, die optionale Aussparung für einen O-Ring 6, die einzelnen Kontaktelemente 4, hier in diesem Beispiel liegen vier einzelne Kontaktelemente 4 vor, und der Aufnahmeraum 3 für die eigentliche Batteriezelle.

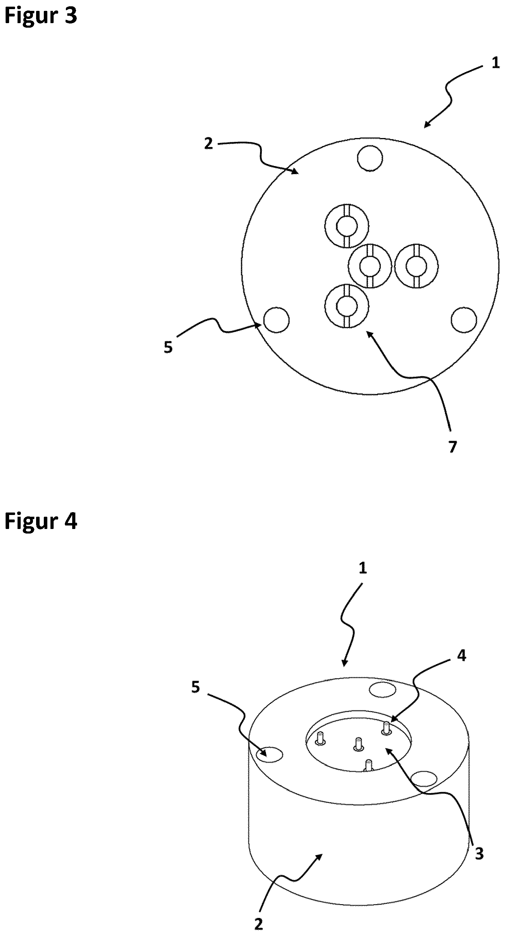

Die Figur 3 zeigt eine Ansicht einer erfindungsgemäßen Zellkörperhälfte 1 von unten. In dieser Figur sind der eigentliche Zellkörper 2, die drei Bohrungen zur Verbindung zweier Zellkörperhälften 1 und die Halteelemente 7 zu sehen. Die Halteelemente 7 können beispielsweise in Form von Schrauben mit dem eigentlichen Zellkörper 2 mechanisch verbunden sein. Bei den Haltelementen 7 kann es sich beispielsweise um Edelstahlschrauben handeln, welche von der Unterseite der Zellkörperhälfte 1 bis an den Aufnahmeraum führen. Die Edelstahlschrauben weisen am ins Zellinnere zeigende Ende eine Einsparung für einen Federkontakt (nicht dargestellt) auf. Dies ermöglicht beim Herausschrauben ein einfaches, flexibles Austauschen beschädigter Federkontakte oder den Einsatz von Federkontakten mit anderen Federkonstanten, um den Anpressdruck innerhalb der Zelle zu verändern. Die Halteelemente 7 sind zur Außenseite hin durch einen O-Dichtungsring (platziert in einer Dichtungsringnut), welcher vom Schraubenkopf gegen den Korpus gepresst wird, gasdicht gehalten. Gleichzeitig kann eine Bohrung von 4 mm Durchmesser in den Schraubenkopf führen. Die Halteelemente 7 können von unten mit konventionellen 4 mm Laborsteckern elektrisch kontaktiert werden. Die Kopfform der Halteelemente ist beliebig, kann aber einen Schlitz für einen Schraubenzieher aufweisen. Die geringe Anzahl an Teilen ermöglicht ein sehr einfaches Zusammenbauen, sowohl unter normalen Bedingungen als auch innerhalb einer Glovebox mit nur eingeschränktem Bewegungsspielraum.

Die Figur 4 zeigt eine weitere erfindungsgemäße Ausgestaltung einer Zellkörperhälfte 1. Diese Zellkörperhälfte 1 kann beispielsweise als obere Zellkörperhälfte 1 einer Anordnung aus zwei Zellkörperhälften 1 angesehen werden. Ebenso wie die untere Zellkörperhälfte 1 weist die obere Zellkörperhälfte 1 Bohrungen 5 auf, welche zur Verbindung der beiden Zellkörperhälften 1 dienen können. Der Zellkörper 2 selbst ist aus Kunststoffmaterial gefertigt. Am Kopf der Halteelemente (nicht dargestellt) sind die einzelnen Kontaktelemente 4 dargestellt.

Auch in dieser Ausgestaltung der oberen Zellkörperhälfte 1 sind beispielhaft vier Kontaktelemente 4 dargestellt. Die unterschiedlichen Zellkörperhälften 1 können aber unterschiedliche Anzahl an Kontaktelementen 4 und damit auch Haltelementen 7 aufweisen. So ist es beispielsweise möglich, dass die obere Zellkörperhälfte 1 nur ein Kontaktelement 4 aufweist. Ebenso wie die untere Zellkörperhälfte 1 weist die obere Zellkörperhälfte 1 eine Aussparung 3 auf, in welcher die eigentliche Messzelle bei der Messung platziert werden kann.

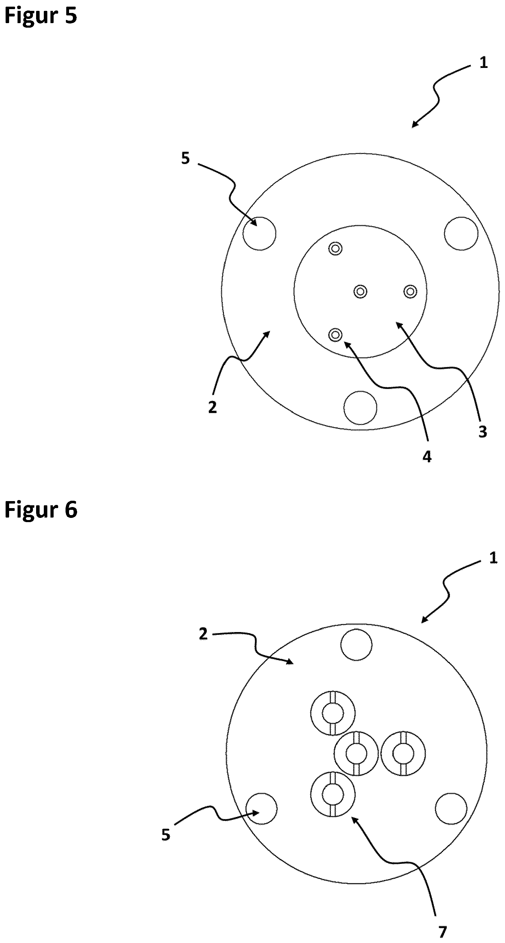

Die Figur 5 zeigt eine Aufsicht auf eine erfindungsgemäße Zellkörperhälfte 1, in diesem Fall eine obere Zellkörperhälfte 1. In dieser Aufsicht erkennt man den eigentlichen Zellkörper 2, die Bohrungen 5, den Aufnahmeraum 3 und die Kontaktelemente 4. In dieser Ausgestaltung befinden sich im Aufnahmeraum 3 vier einzelne Kontaktelemente 4. Es ist zudem erkennbar, dass nicht zwangsläufig jede Zellkörperhälfte 1 eine Dichtungsringnut aufweisen muss.

Die Figur 6 zeigt eine mögliche erfindungsgemäße Ausgestaltung einer oberen Zellkörperhälfte 1 in einer Ansicht von unten. Es ist der eigentliche Zellkörper 2 erkennbar, in welchen die vier Halteelemente 7 eingelassen sind. Zudem zeigt diese Ansicht noch die Bohrungen 5, durch welche mittels Schrauben die beiden Zellkörperhälften 1 miteinander verbindbar sind.

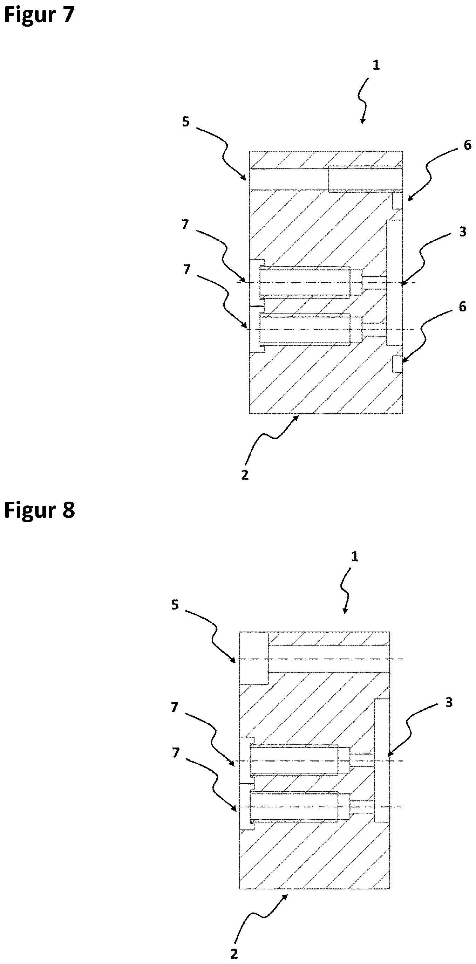

Die Figur 7 zeigt einen Querschnitt einer erfindungsgemäßen Ausgestaltung einer unteren Zellkörperhälfte 1. Es sind die Halteelemente 7 zu erkennen, die sich durch den Zellkörper 2 erstrecken. Die Halteelemente 7 sind hohl ausgeführt und können beispielsweise einen Stecker zur elektrischen Kontaktierung aufnehmen. An der Spitze der Halteelemente 7 können jeweils Kontaktelemente (nicht dargestellt) angebracht werden. Die Halteelemente 7 verbinden zusammen mit den Kontaktelementen die eine Seite des Zellkörper mit dem Aufnahmeraum 3. Des Weiteren sind im eigentlichen Zellkörper 2 Aussparungen 6 angebracht, welche zur Aufnahme einer Dichtung dienen können. Des Weiteren ist eine Bohrung 5 gezeigt, durch welche eine Schraube zwei Zellkörperhälften miteinander verbinden kann.

Die Figur 8 zeigt einen Querschnitt einer erfindungsgemäßen Ausgestaltung einer oberen Zellkörperhälfte 1. Es sind die Halteelemente 7 zu erkennen, die sich durch den Zellkörper 2 erstrecken. Die Halteelemente 7 sind hohl ausgeführt und können beispielsweise einen Stecker zur elektrischen Kontaktierung aufnehmen. An der Spitze der Halteelemente 7 können jeweils Kontaktelemente (nicht dargestellt) angebracht werden. Die Halteelemente 7 verbinden zusammen mit den Kontaktelementen die eine Seite des Zellkörper mit dem Aufnahmeraum 3. Des Weiteren sind im eigentlichen Zellkörper 2 Aussparungen 6 angebracht, welche zur Aufnahme einer Dichtung dienen können. Des Weiteren ist eine Bohrung 5 gezeigt, durch welche eine Schraube zwei Zellkörperhälften miteinander verbinden kann.

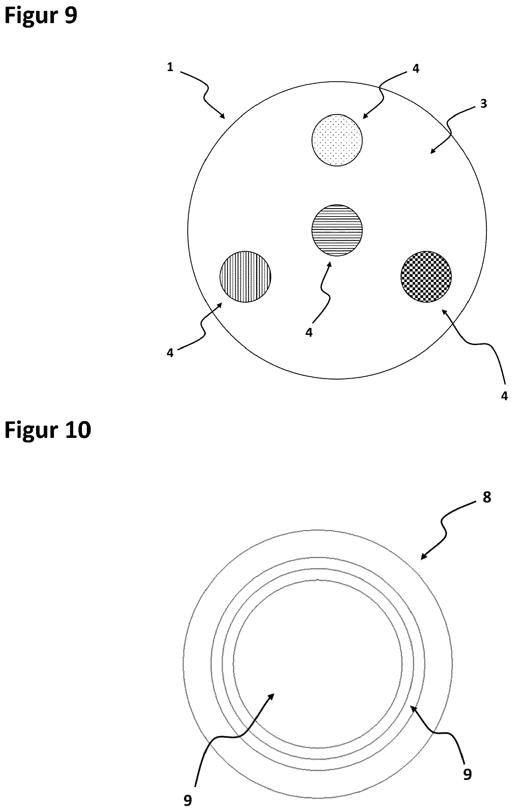

Die Figur 9 zeigt eine Aufsicht auf eine Ausgestaltung eines erfindungsgemäßen Aufnahmeraums 3 einer Zellkörperhälfte 1 mit vier unterschiedlichen Kontaktelementen 4. Die Kontaktelemente 4 können beispielsweise Kontaktelemente 4 aus Kupfer, Platin, Nickel und Eisen sein und in einem einzigen Zusammenbau der Zellen nacheinander oder gleichzeitig als Messstellen dienen. Dies ermöglicht gegenüber Mikrokontakten, welche mit einer Feder auf kleiner Fläche gegen die Probe gedrückt werden, ein verringertes Kurzschlussrisiko, da der Druck, welcher auf der Probe lastet, ebenmäßiger verteilt wird.

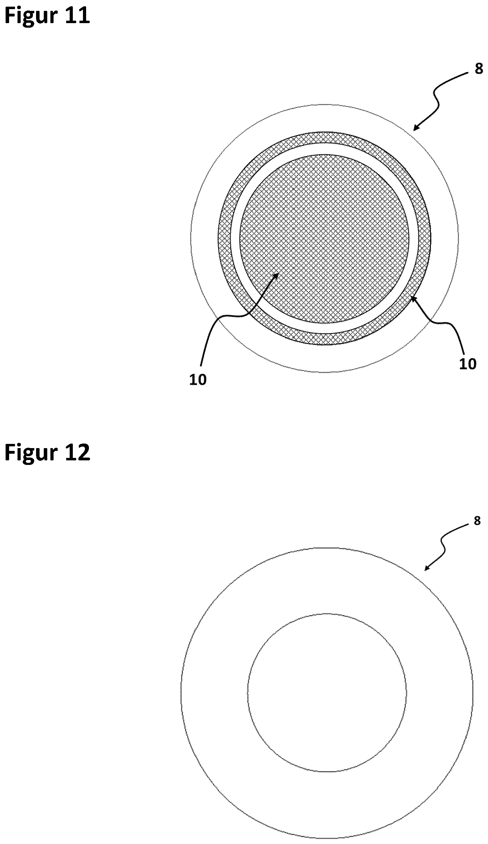

Die Figuren 10 und 11 zeigen schematische Aufsichten erfindungsgemäßer Ausgestaltungen eines Stromableiters 8 (unten). Der Stromableiter 8 kann ringförmig ausgebildet und minimal kleiner als der Durchmesser des Aufnahmeraumes 3 sein (z.B. 0,1 mm) um ein einfaches Gleiten innerhalb des Aufnahmeraumes 3 zu ermöglichen. Dies stellt einen großen Vorteil dieses Designs dar. Es kann ein fixes Zelldesign verwendet werden, in welchen beliebige Stromableiter 8 verschiedenen Aufbaus eingesetzt werden können. Die Figur 10 zeigt, dass der Stromableiter 8 Aussparungen 9 an der Oberfläche aufweisen kann, die mit einem Elektrodenmaterial der zu vermessenden Batteriezelle gefüllt sein können. In der Figur 10 ist der Stromableiter 8 ohne weitere Auffüllung mit Elektrodenmaterial dargestellt. In der Figur 11 ist dieselbe Ausgestaltung gezeigt, wobei die Aussparungen des Stromableiters 8 beispielsweise mit Lithiummetall 10 gefüllt sind. Auf dem Stromableiter ergeben sich somit zwei konzentrische Bereiche, welche durch einen nicht leitenden, mittleren Bereich getrennt sind.

Die Figur 12 zeigt eine weitere Ausgestaltung eines erfindungsgemäßen Stromableiters 8 in der Aufsicht (oben). Dieser Stromableiter 8 weist keine Aussparungen auf der Oberfläche auf. Durch den inneren Kreis des Stromableiters 8 ist angedeutet, dass dieser Stromableiter aus zwei unterschiedlichen Materialien gefertigt ist. So kann beispielsweise der innere Bereich aus Edelstahl und der äußere Bereich aus einem nicht leitenden Kunststoffmaterial gefertigt sein.

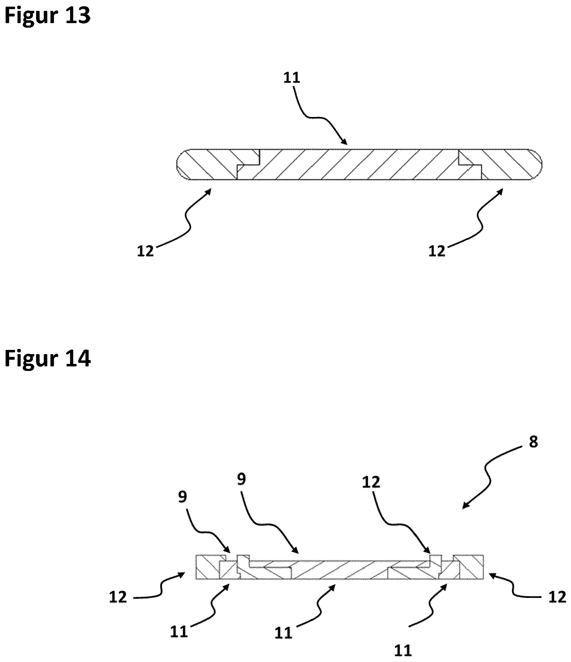

Die Figuren 13 und 14 zeigen mögliche Ausgestaltungen erfindungsgemäßer Stromableiter 8 im Schnitt. Die Figur 13 zeigt dabei beispielsweise eine Ausgestaltung für einen oberen Stromableiter 8. Dieser Stromableiter 8 weist keine Vertiefungen in der Oberfläche auf und ist auch nicht dazu eingerichtet, Elektrodenmaterial der zu vermessenden Batteriezelle aufzunehmen. Der innere Bereich 11 ist aus Edelstahl gefertigt, wohingegen die beiden äußeren Bereiche 12 aus einem Kunststoffmaterial gefertigt sein können. Der obere Stromabnehmer 8 weist eine zylindrische Form auf, wobei die Zylinderecken abgerundet sind. In der Figur 14 ist ein Querschnitt eines möglichen unteren Stromableiters 8 dargestellt. Dabei kann der untere Stromableiter 8 einen Zylinder mit geraden Kanten darstellen. Dies dient dazu, dass der untere Stromableiter 8 uni-axial durch die Federkontakte nach oben gepresst wird, wohingegen der obere Stromableiter 8 durch die abgerundeten Kanten eine erhöhte Flexibilität innerhalb des Gehäuses aufweist und beispielsweise durch vier Kontaktelemente 4 ebenmäßiger an eine beliebige Probenoberfläche gepresst werden kann. Dies ist beispielsweise für spröde keramische Festelektrolytscheiben oder gepresste sulfidische Tabletten wichtig, da es den Vorteil eines reproduzierbaren Innendrucks erlaubt, welcher von der äußeren Verschraubung unabhängig ist. Letzteres ist etwa bei Swagelok T-Zellen der Fall. Dabei ist der Austausch dieser Stromableiter 8 zwischen oben und unten, sowie eine Kombination zweier abgerundeter oder zweier nicht- abgerundeter Stromableiter 8 möglich.

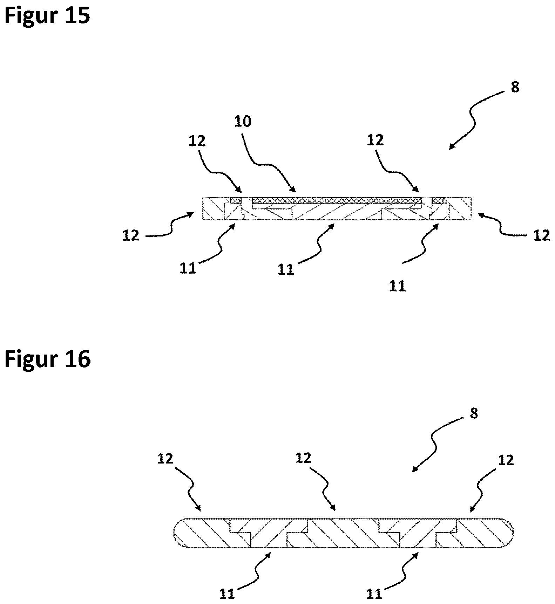

Die Figuren 14 und 15 zeigen mögliche Ausgestaltungen eines unteren Stromableiters 8 mit Aussparung auf der Oberfläche des Stromableiters 8. In die Aussparungen des Stromableiters 8 können Teile der Elektroden der Batteriezelle eingelassen sein. Mit diesen Elektrodenbestandteilen ergibt sich für den Stromableiter 8 eine ebene Oberfläche. Des Weiteren ist in der Figur erkennbar, dass der Stromableiter 8 eine zylindrische Form aufweist und aus unterschiedlichen Materialien gefertigt ist. Der Stromableiter 8 kann dabei aus Bereichen bestehen, welche aus Edelstahl 11 oder aus einem Kunststoffmaterial 12 ausgebildet sind. Durch die Wahl der leitenden Bereiche wird die Kontaktierung zu den Kontaktelementen 4 (nicht dargestellt) hergestellt. Diese Ausgestaltung der Stromableiter 8 ist so flexibel, dass die prinzipiell auch als Stromableiter für andere Zelltypen, wie beispielsweise Swagelok-T-Zellen einsetzbar sind. Diese verbessern das Grundprinzip dieser T-Zellen, da die Referenzelektrode nun nicht mehr im rechten Winkel angebracht werden muss. Zudem ergeben sich prinzipiell dieselben Vorteile, wie für den erfindungsgemäßen Aufbau, beispielsweise im Sinne einer verbesserten Druckverteilung.

Die Figur 16 zeigt eine weitere Ausgestaltung für einen erfindungsgemäßen Stromableiter 8. Dieser Ausgestaltung eignet sich beispielsweise zur Vermessung von Batteriezellen mit einem Aufbau mit vier Kontaktelementen 4 (nicht dargestellt).

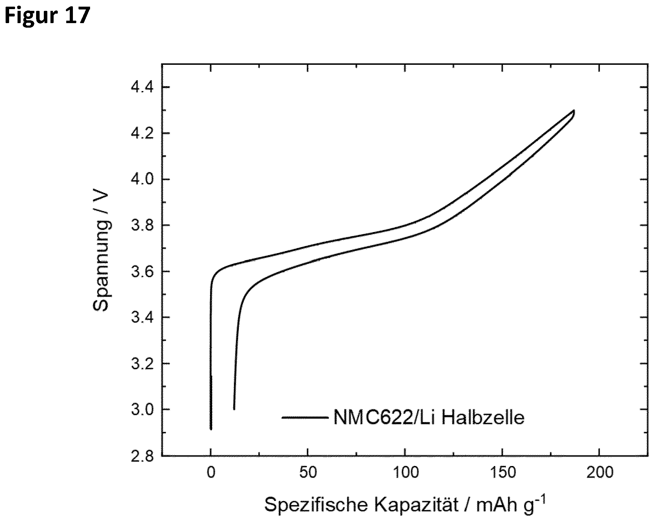

Die Figur 17 zeigt eine Messkurve, welche über den erfindungsgemäßen Zellaufbau erhalten wurde. Dargestellt ist das Spannungsverhalten einer sekundären Lithium-Batteriezelle als Funktion der spezifischen Kapazität innerhalb eines Zyklus-Experimentes. Bei der Batteriezelle handelt es sich um folgenden Aufbau. Es wurden Zellkörperteile aus der Figur 1 und 3 unter Verwendung eines O-Dichtungsrings und vergoldeten Kupferfederkontakten mit einer Federkonstante von 1,5 N genutzt. Die Referenzelektrode und negative Elektrode bestanden aus Lithium und wurden entsprechend Figur 11 in einen Stromableiter nach Figur 10 eingebettet. NMC622 wurde als Aktivmaterial der positiven Elektrode eingesetzt und mittels eines Stromableiters nach Figur 12 elektrisch kontaktiert. Als Separator und Festelektrolyt wurde PEO-LiTFSI eingesetzt. Die Zelle wurde galvanostatisch mit einem Lade- und Entladestrom von 15 mA g⁻¹ betrieben. Es ergeben sich sehr reproduzierbare Messungen und der Anteil an Messabbrüchen ist äußerst gering.

## Patentansprüche

1. Elektrische Messanordnung für sekundäre Alkali-Festelektrolyt-Batterien,
**dadurch gekennzeichnet, dass**
die Messanordnung mindestens umfasst:
- zwei elektrisch nicht-leitende Zellkörperhälften (1), wobei beide Zellkörperhälften (1) mindestens eine und eine Zellkörperhälfte (1) mindestens drei Durchführungen aufweist, wobei beide Zellkörperhälften (1) an der Innenseite jeweils eine Aussparung aufweisen, wobei die Aussparungen zusammen genommen einen Aufnahmeraum (3) zur Aufnahme einer Festelektrolyt-Batteriezelle aus mindestens einer Anode, einer Kathode und einem Festelektrolyt ausbilden, und die Durchführungen sich jeweils von einer Außenseite der Zellkörperhälfte (1) zum Aufnahmeraum (3) hin erstrecken;
- ein elektrisch leitendes Halteelement (7) für jede Durchführung, wobei das Halteelement (7) dazu ausgerüstet ist mit der jeweiligen Zellkörperhälfte (1) mechanisch verbindbar zu sein;
- ein elektrisches Kontaktelement (4) für jedes Halteelement (7), wobei das elektrische Kontaktelement (4) zum Aufnahmeraum (3) hin an dem Halteelement (7) anbringbar und dazu eingerichtet ist, seine Länge in Abhängigkeit der auf das Element (4) wirkenden Kraft zu ändern; und
- zwei flächige Stromableiter (8) aufweisend elektrisch leitende (11) und elektrisch nicht-leitende Bereiche (12), wobei mindestens einer der Stromableiter (8) dazu eingerichtet ist, mindestens drei separate, elektrisch leitende Verbindungen zwischen den Kontaktelementen (4) und einer Elektrode der Festelektrolyt-Batteriezelle auszubilden,
wobei die mechanische Kraft der Kontaktelemente (4) über die Stromableiter (8) auf die Festelektrolyt-Batterie ausgeübt wird.

2. Messanordnung nach Anspruch 1, wobei der Aufnahmeraum (3) rotationssymmetrisch ausgebildet ist.

3. Messanordnung nach einem der vorhergehenden Ansprüche, wobei die unterschiedlichen Kontaktelemente (4) jeder Zellkörperhälfte (1) unterschiedliche Metalle aufweisen.

4. Messanordnung nach einem der vorhergehenden Ansprüche, wobei das elektrische Kontaktelement (4) ein Federkontakt und die Anordnung der Kontaktelemente (4) zum Aufnahmeraum hin rotationssymmetrisch ist.

5. Messanordnung nach Anspruch 4, wobei jede Messkörperhälfte (1) vier Durchführungen, vier Halteelemente (7) und vier Kontaktelemente (4) aufweist, wobei eines der elektrischen Kontaktelemente (4) mittig und die weiteren drei Kontaktelemente (4) auf einer Kreisbahn um das mittige Kontaktelement (4) herum und die drei weiteren Kontaktelemente (4) auf der Kreisbahn um jeweils 120° versetzt angeordnet sind.

6. Messanordnung nach Anspruch einem der Ansprüche 4 oder 5, wobei die elektrischen Kontaktelemente (4) der unteren und der oberen Zellkörperhälfte (1) während der Messung um 60° zueinander versetzt angeordnet sind.

7. Messanordnung nach einem der vorhergehenden Ansprüche, wobei die Stromableiter (8) Vertiefungen an den Stellen aufweisen, an denen die Stromableiter (8) von den Kontaktelementen (4) elektrisch kontaktiert werden.

8. Messanordnung nach einem der vorhergehenden Ansprüche, wobei einer der Stromableiter (8) eine zylindrische Geometrie und der andere Stromableiter (8) eine zylindrische Geometrie mit abgerundeten Kanten aufweist.

9. Messanordnung nach einem der vorhergehenden Ansprüche, wobei jeder der Stromableiter (8) zur Innenseite des Aufnahmeraumes (3) hin eine Aussparung aufweist, wobei die Aussparung dazu eingerichtet ist, eine Elektrode der Festelektrolyt-Batterie aufzunehmen.

10. Messanordnung nach einem der Ansprüche 4 - 9, wobei die Federkontakte eine Federkonstante von größer oder gleich 0,05 N und kleiner oder gleich 50 N aufweisen.

11. Verwendung einer Messanordnung nach einen der vorhergehenden Ansprüche zur Bestimmung der elektrischen Eigenschaften sekundärer Alkali-Festelektrolyt-Batteriezellen.

## Claims

1. An electrical measuring assembly for secondary alkali solid-electrolyte batteries,
**characterized in that**
the measuring assembly comprises at least:
- two electrically non-conductive cell body halves (1), wherein both cell body halves (1) have at least one and one cell body half (1) has at least three passages, wherein both cell body halves (1) each have a recess on the inside, wherein the recesses taken together form a receiving space (3) for receiving a solid-electrolyte battery cell consisting of at least one anode, one cathode and one solid electrolyte, and the passages each extend from an outside of the cell body half (1) towards the receiving space (3);
- an electrically conductive holding element (7) for each passage, wherein the holding element (7) is equipped to be mechanically connectable to the respective cell body half (1);
- an electrical contact element (4) for each holding element (7), wherein the electrical contact element (4) is attachable to the holding element (7) towards the receiving space (3) and is adapted to vary its length as a function of the force acting on the element (4); and
- two flat current arresters (8) having electrically conductive (11) and electrically non-conductive areas (12), wherein at least one of the current arresters (8) is adapted to form at least three separate, electrically conductive connections between the contact elements (4) and an electrode of the solid-electrolyte battery cell,
wherein the mechanical force of the contact elements (4) is applied to the solid-electrolyte battery via the current arresters (8).

2. The measuring assembly according to claim 1, wherein the receiving space (3) is configured to be rotationally symmetrical.

3. The measuring assembly according to any one of the preceding claims, wherein the different contact elements (4) of each cell body half (1) have different metals.

4. The measuring assembly according to any one of the preceding claims, wherein the electrical contact element (4) is a spring contact, and the arrangement of the contact elements (4) is rotationally symmetrical towards the receiving space.

5. The measuring assembly according to claim 4, wherein each measuring body half (1) has four passages, four holding elements (7) and four contact elements (4), wherein one of the electrical contact elements (4) is arranged centrally and the further three contact elements (4) are arranged on a circular path around the central contact element (4) and the three further contact elements (4) are arranged to each be offset by 120° on the circular path.

6. The measuring assembly according to any one of claims 4 or 5, wherein the electrical contact elements (4) of the lower and upper cell body halves (1) are arranged to be offset from one another by 60° during measurement.

7. The measuring assembly according to any one of the preceding claims, wherein the current arresters (8) have recesses in the locations where the current arresters (8) are electrically contacted by the contact elements (4).

8. The measuring assembly according to any one of the preceding claims, wherein one of the current arresters (8) has a cylindrical geometry and the other current arrester (8) has a cylindrical geometry with rounded edges.

9. The measuring assembly according to any one of the preceding claims, wherein each of the current arresters (8) has a recess towards the inside of the receiving space (3), wherein the recess is adapted to receive an electrode of the solid-electrolyte battery.

10. The measuring assembly according to any one of claims 4-9, wherein the spring contacts have a spring constant of greater than or equal to 0.05N and less than or equal to 50N.

11. Use of a measuring assembly according to any one of the preceding claims for determining the electrical properties of secondary alkali solid-electrolyte battery cells.

## Revendications

1. Dispositif électrique de mesure de batteries secondaires à électrolyte solide alcalin,
**caractérisé en ce que**
le dispositif de mesure comprend au moins :
- deux moitiés (1) de corps de cellule non conductrices de l'électricité, dans lequel les deux moitiés (1) de corps de cellule ont au moins une et une moitié (1) de cellule a au moins trois traversées, dans lequel les deux moitiés (1) de corps de cellule ont sur la face intérieure respectivement un évidement, dans lequel les évidements forment pris ensemble un espace (3) de réception pour la réception d'une cellule de batterie à électrolyte solide composé d'au moins une anode, d'une cathode et d'un électrolyte solide et les traversées s'étendent chacune d'une face extérieure de la moitié (1) de corps de cellule à l'espace (3) de réception ;
- un élément (7) de maintien conducteur de l'électricité pour chaque traversée, dans lequel l'élément (7) de maintien est équipé pour pouvoir être relié mécaniquement à la moitié (1) respective de corps de cellule ;
- un élément (4) de contact électrique pour chaque élément (7) de maintien, dans lequel l'élément (4) de contact électrique peut être mis vers l'espace (3) de réception sur l'élément (7) de maintien et est agencé pour modifier sa longueur en fonction de la force s'appliquant à l'élément (4) ; et
- deux parafoudres (8) plats comportant des parties (11) conduisant l'électricité et des parties (12) ne conduisant pas l'électricité, dans lequel au moins l'un des parafoudres (8) est agencé pour former au moins trois liaisons distinctes conductrices de l'électricité entre les éléments (4) de contact et une électrode de la cellule de batterie à électrolyte solide,
dans lequel la force mécanique des éléments (4) de contact est appliquée à la batterie à électrolyte solide par les parafoudres (8) .

2. Dispositif de mesure suivant la revendication 1, dans lequel l'espace (3) de réception est de révolution.

3. Dispositif de mesure suivant l'une des revendications précédentes, dans lequel les éléments (4) de contact différents de chaque moitié (1) de corps de cellule ont des métaux différents.

4. Dispositif de mesure suivant l'une des revendications précédentes, dans lequel l'élément (4) de contact électrique est un contact à ressort et l'agencement des éléments (4) de contact est de révolution par rapport à l'espace de réception.

5. Dispositif de mesure suivant la revendication 4, dans lequel chaque moitié (1) de corps de mesure a quatre traversées, quatre éléments (7) de maintien et quatre éléments (4) de contact, dans lequel l'un des éléments (4) de contact électrique est disposé au centre et les trois autres éléments (4) de contact sont disposés sur une orbite circulaire autour de l'élément (4) de contact central et les trois autres éléments (4) de contact sont disposés en étant décalés de respectivement 120° sur l'orbite circulaire.

6. Dispositif de mesure suivant l'une des revendications 4 ou 5, dans lequel les éléments (4) de contact électrique de la moitié (1) de corps de cellule inférieure et de la moitié (1) de corps de cellule supérieure sont disposés en étant décalés les uns par rapport aux autres de 60° pendant la mesure.

7. Dispositif de mesure suivant l'une des revendications précédentes, dans lequel les parafoudres (8) ont des creux aux points où les parafoudres (8) sont contactés électriquement par les éléments (4) de contact.

8. Dispositif de mesure suivant l'une des revendications précédentes, dans lequel l'un des parafoudre (8) a une géométrie cylindrique et l'autre parafoudres (8) a une géométrie cylindrique à bords arrondis.

9. Dispositif de mesure suivant l'une des revendications précédentes, dans lequel chaque parafoudre (8) a vers la face intérieure de l'espace (3) de réception un évidement, dans lequel l'évidement est agencé pour recevoir une électrode de la batterie à électrolyte solide.

10. Dispositif de mesure suivant l'une des revendications 4 à 9, dans lequel les contacts à ressort ont une raideur supérieure ou égale à 0,05 N et inférieure ou égale à 50 N.

11. Utilisation d'un dispositif de mesure suivant l'une des revendications précédentes pour la détermination des propriétés électriques de cellules de batterie secondaire à électrolyte solide alcalin.
